# EUROPEAN PATENT APPLICATION

(11) **EP 3 395 174 A1**
(43) Date of publication of application: **31.10.2018**
(21) Application number: 18164484.0
(22) Date of filing: 28.03.2018
(51) Int. Cl.: A21C 5/00, A21C 11/10, A21C 11/16

(54) **COMPACT CUTTING APPARATUS FOR A DOUGH EXTRUSION MACHINE**

(30) Priority: 28.04.2017 AT 503482017
(71) Applicant: Haas Food Equipment GmbH, 2100 Leobendorf Niederösterreich (AT)
(72) Inventor: Jiraschek, Stefan, 2202 Königsbrunn (AT); Petersson, Mogens, 2990 Niva (DK); Bjerrum, Per, 2000 Frederiksberg (DK)

(57) **Abstract**

The invention relates to a cutting apparatus (1) for a dough extrusion machine comprising a base body (2) having a plurality of openings (3) for the passage of dough and two opposingly moving cutting plates (4a, 4b) with openings (5a, 5b) for the passage of dough. Furthermore, the apparatus (1) comprises a guide (6) for the cutting plates (4a, 4b) enabling a linear movement of the cutting plates (4a, 4b) in the direction (x) of their longitudinal extension (I). Moreover, the apparatus (1) comprises a single drive unit (7), which is mechanically coupled to the cutting plates (4a, 4b). The drive unit (7) and the mechanical coupling to the cutting plates (4a, 4b) are arranged in the extension of the longitudinal extensions (I) of the cutting plates (4a, 4b) and exclusively on one side of the cutting plates (4a, 4b).

## Description

The invention relates to a cutting apparatus for a dough extrusion machine, comprising a base body having a plurality of openings for the passage of dough and a first cutting plate arranged adjacent to the base body and a second cutting plate arranged adjacent to the first cutting plate. The first and second cutting plates each have a longitudinal extension or length and a shorter transverse extension or width and in each case several openings for the passage of dough. Furthermore, the cutting apparatus comprises a guide, in which the first cutting plate and the second cutting plate are supported. The guide enables the linear movement of the first cutting plate and the second cutting plate in the direction of their longitudinal extension relative to the base body and relative to each other. Finally, the cutting apparatus comprises a single drive unit, which is mechanically coupled to the first cutting plate and the second cutting plate and designed to opposingly move the first cutting plate and the second cutting plate relative to the base body. A dough extrusion machine may be coupled or connected to the cutting apparatus, in particular to the upper side of the base body in the region of the openings for the passage of dough.

A cutting apparatus of the kind above in principle is known. For example, US 3,797,069 discloses a dough extrusion machine respectively a cutting apparatus for the production of food products such as meatballs, dumplings and the like. Dough is extruded onto a moving conveyor from the horizontally elongated extrusion apparatus, which overlies and extends transversely of the conveyor. The apparatus comprises a chamber for containing an extrudable quantity of the food product, a pair of superimposed apertured plates mounted in the bottom of the chamber for reciprocation lengthwise of the chamber, and means for reciprocating the plates.

A drawback of the apparatus is its complicated mechanical coupling between a drive and the apertured plates. On the one hand, this makes cleaning of the apparatus complicated, and moreover the apparatus has a lot of parts being prone to getting dirty. On the other hand, the complicated mechanism makes changing the extrusion plate and the apertured plates time consuming in case of a product change, for example if different cookies shall be made.

Accordingly, one problem of the invention is to provide an improved cutting apparatus for a dough extrusion machine. In particular, the cutting apparatus shall be easy to clean, shall have just a few parts being prone to getting dirty and shall allow for fast product changes.

The problem of the invention is solved by a cutting apparatus for a dough extrusion machine as defined in the opening paragraph, wherein the drive unit and the mechanical coupling to the first cutting plate and to the second cutting plate are arranged in the extension of the longitudinal extensions of the first cutting plate and the second cutting plate and exclusively on one side of the first cutting plate and the second cutting plate.

In other words, the drive unit is arranged besides the base body of the cutting apparatus, seen in transverse extension of the first cutting plate and the second cutting plate and in particular seen in a moving direction of carrier or belt, which is arranged below the cutting apparatus. Accordingly, the cutting apparatus is very compact and has just a few parts being prone to getting dirty. Moreover, product changes can take place fast as the drive unit can be detached from the base body easily. That is the reason why also cleaning of the machine does not take much time.

Further advantageous embodiments are disclosed in the claims and in the description as well as in the Figures.

In a beneficial embodiment of the cutting apparatus,
- the drive unit comprises a rotatable lever/disc with two eccentric pins, which are arranged opposite to each other relative to the center of rotation of the rotatable lever/disc,
- the first cutting plate and the second cutting plate are each coupled to a drive piece or have such a drive piece, and
- each drive piece has an long hole, which is aligned in the direction of the transverse extension of the cutting plates and into which one of the two said pins protrudes during operation of the cutting apparatus.
In this way, the rotational movement of the motor can be converted into a linear movement of the cutting plates.

Beneficially, the coupling between a pin and a long hole is effected by a sliding block movably mounted in the long hole. Depending on the driving forces, the contact pressure between the pins and the long holes may exceed an acceptable value because of the body contact along a line. In this case, but not only in this case, the coupling between the pins and the drive pieces may be effected by sliding blocks movably mounted in the long holes. In this way, the contact pressure may be reduced as there is a relative large contact area between the pins and the sliding blocks and between the sliding blocks and the long holes compared to a simple contact line.

In an advantageous embodiment of the cutting apparatus, the pins are loosely inserted into the long holes or sliding blocks. In this way, the pins can easily be decoupled from the drive pieces or the sliding blocks. In turn, the drive unit can easily be decoupled from the cutting apparatus as well. In a very preferred embodiment, there are no further means holding the pins in the long holes or sliding blocks. However, the pins may be secured by means of a snap ring or a screw for example.

In yet another advantageous embodiment of the cutting apparatus, the rotational axis of the rotatable lever/disc and the axes of the pins are aligned perpendicular to the longitudinal extension and to the transverse extension of the first cutting plate and the second cutting plate. In other words, the axes are oriented vertically. In this way, the cutting plates can get close to a carrier, onto which dough pieces are placed as nearly no part protrudes downwards from the cutting plates. For this reason, dough may be placed onto the carrier very precisely, and cookies of high quality can be produced. This is contrary to prior art designs, which suffer from parts protruding downwards from the cutting plates thus impeding a low distance between the cutting plates and a carrier, onto which dough pieces are placed.

Beneficially, on the first cutting plate and the second cutting plate in each case a drive rail is fastened, wherein the drive rails run over the entire longitudinal extension of the first cutting plate and the second cutting plate and wherein the drive rails comprise the drive pieces or are attached to the drive pieces. The first and the second cutting plate may be subjected to warpage and buckling because of the drive unit being arranged on one side of the longitudinal extensions of the first and the second cutting plate and depending on the thickness of the cutting plates and the quality of the guide. However, cutting plates are naturally relatively thin and the guide cannot be made too tight as then driving forces increase making the warpage and buckling problem worse. Dough getting between the guide and the first and the second cutting plate even intensifies the problem. On the other hand, if the guide is rather loose, the warpage and buckling problem gets worse, too. To solve this problem, drive rails are proposed, which run over the entire longitudinal extension of the first and the second cutting plate and avoid warpage and buckling of the first and the second cutting plate. In a preferred embodiment, the drive rails comprise the drive pieces, to which the drive unit is coupled by means of the eccentric pins. However, the drive pieces may be embodied as separate parts, which are mounted to the drive rails.

In the context of reducing friction, additionally to the openings for the passage of dough further cutouts or recesses may be arranged in the cutting plates and/or in the base body in order to reduce the contact area between the cutting plates and/or between the first cutting plate and the base body and thus reduce friction between said parts. Moreover, cutouts or recesses may also be arranged in the guide rails for the same reason. These measures do not just reduce friction, but also provide space for dough getting between the machine parts. In particular, in case of dough with chocolate, caramel or other friction increasing ingredients, the cutting plates can easily get agglutinated without such cutouts or recesses.

In an advantageous embodiment of the cutting apparatus, the guide is formed by at least one guide rail fastened to the base body by means of screws. In particular, the guide rail can be removed from the base body by simply loosening the screws. In usual cases, parts fastened by means of screws have circular holes what means that a screw has to be turned out completely to detach the fastened part. However, in case of a cutting apparatus for a dough extrusion machine this is disadvantageous because the screws may fall into the dough or in even worse cases into the dough extrusion machine. The probability for losing the screws is quite high as the guide or guide rails has/have to be removed regularly for cleaning the cutting apparatus and in case of product changes. However, by use of the proposed features, the screws cannot get lost as they simply have be loosened to remove the guide or guide rails, but need not turned out completely. For this reason, elongated washers may be used, and the guide rails may comprise long holes, which are slightly larger than the washers. If the guide rails have to be fastened to the base body, the washers are simply oriented transverse to the orientation of the long holes. In contrast, the washers are oriented in the same orientation like the long holes if the guide rails have to be removed from the base body.

In yet another advantageous embodiment of the cutting apparatus, the drive unit can be fastened to the base body by means of at least one screw and can be removed from the base body by simply loosening the at least one screw. Again, it is advantageous that the screw cannot get lost when the drive unit is detached what is beneficial for cleaning the cutting apparatus and in case of a product change. For example, fastening the drive unit to the base body can be done by means of a clamping lever.

Although screws are beneficial means to mount the drive unit and/or the guide rails to the base body, one should understand that also other means for mounting the drive unit and/or the guide rails to the base body are possible. For example, a bayonet joint, clamping mechanisms and the like may be used.

For better understanding the invention, Figures showing embodiments of the invention are presented hereinafter. The Figures schematically show:
- Fig. 1: a top view of an exemplary cutting apparatus for a dough extrusion machine;
- Fig. 2: a side view of the cutting apparatus shown in Fig. 1;
- Fig. 3: a bottom view of the cutting apparatus shown in Fig. 1;
- Fig. 4: a back view of the cutting apparatus shown in Fig. 1;
- Fig. 5: an enlarged cross sectional view of the cutting apparatus shown in Fig. 1;
- Fig. 6: a detailed view of mounting means;
- Fig. 7: an exploded side view of the cutting apparatus shown in Fig. 1 and
- Fig. 8: an exploded bottom view of the cutting apparatus shown in Fig. 1.

Generally, same parts or similar parts are denoted with the same/similar names and reference signs. The features disclosed in the description apply to parts with the same/similar names respectively reference signs. Indicating the orientation and relative position (up, down, sideward, etc) is related to the associated Figure, and indication of the orientation and/or relative position has to be amended in different Figures accordingly as the case may be.

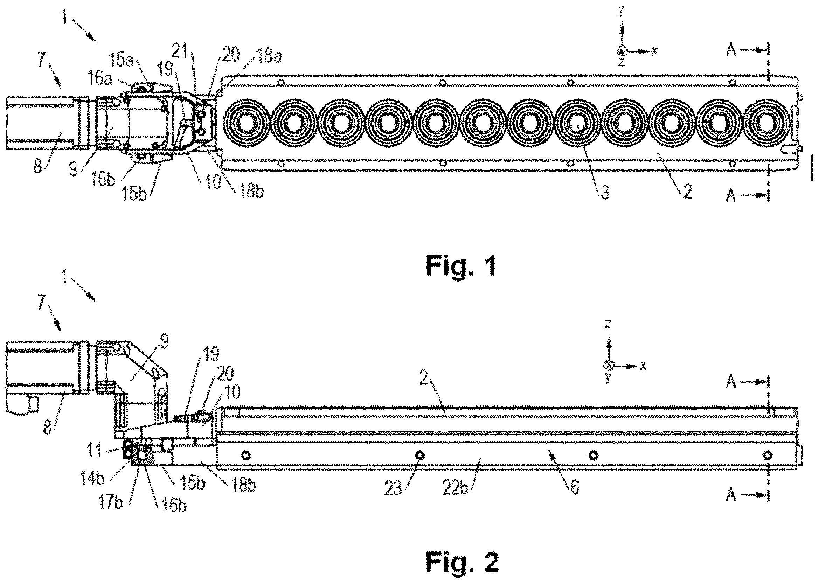

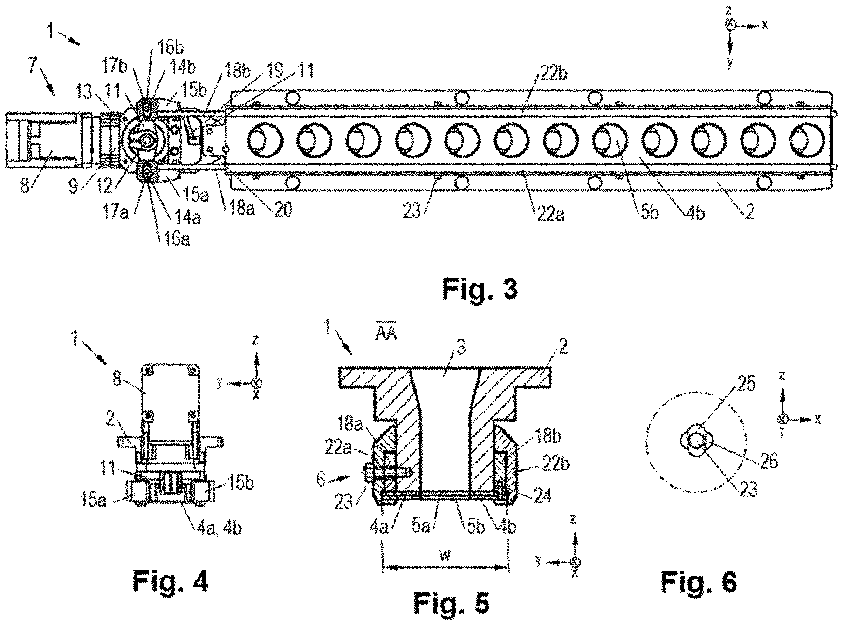

Figs 1 to 4 show an exemplary cutting apparatus 1 for a dough extrusion machine in different views. Fig. 1 shows a top view of the cutting apparatus 1, Fig. 2 side view, Fig. 3 a bottom view and Fig. 4 a back view.

The cutting apparatus 1 comprises a base body 2 having a plurality of openings 3 for the passage of dough, a first cutting plate 4a arranged adjacent to the base body 2 and a second cutting plate 4b arranged adjacent to the first cutting plate 4a. The first and second cutting plates 4a, 4b each have a longitudinal extension or length l and a shorter transverse extension or width w, and in each case several openings 5a, 5b for the passage of dough. Furthermore, the cutting apparatus 1 comprises a guide 6, in which the first cutting plate 4a and the second cutting plate 4b are supported. The guide 6 enables a linear movement of the first cutting plate 4a and the second cutting plate 4b in the direction x of their longitudinal extension l relative to the base body 2 and relative to each other. In addition, the cutting apparatus 1 comprises a single drive unit 7, which is mechanically coupled to the first cutting plate 4a and the second cutting plate 4b and designed to opposingly move the first cutting plate 4a and the second cutting plate 4b relative to the base body 2. The drive unit 7 and the mechanical coupling to the first cutting plate 4a and to the second cutting plate 4b are arranged in the extension of the longitudinal extensions l of the first cutting plate 4a and the second cutting plate 4b and exclusively on one side of the first cutting plate 4a and the second cutting plate 4b.

Concretely, the drive unit 7 comprises a motor 8, a gear 9 coupled to said motor 8, a frame 10 mounted to said gear 8 and a rotatable lever 11 clamped to a gear shaft 12 of the gear 9 by means of screws 13.

The rotatable lever 11 comprises two eccentric pins 14a, 14b, which are arranged opposite to each other relative to the center of rotation of the lever 11. The center of rotation is the axis of the gear shaft 12 here. The first cutting plate 4a and the second cutting plate 4b are each coupled to a drive piece 15a, 15b. Each drive piece 15a, 15b has a long hole 16a, 16b, which is aligned in the direction y of the transverse extension w of the cutting plates 4a, 4b and into which one of the two said pins 14a, 14b protrudes during operation of the cutting apparatus 1.

The coupling between a pin 14a, 14b and a long hole 16a, 16b is effected by a sliding block 17a, 17b movably mounted in the long hole 16a, 16b. Depending on the driving forces, the contact pressure between the pins 14a, 14b and the long holes 16a, 16b may exceed an acceptable value because of the body contact along a line. In this case, but not only in this case, the coupling between the pins 14a, 14b and the drive pieces 15a, 15b may be effected by sliding blocks 17a, 17b movably mounted in the long holes 16a, 16b. In this way, the contact pressure may be reduced as there is a relative large contact area between the pins 14a, 14b and the sliding blocks 17a, 17b and between the sliding blocks 17a, 17b and the long holes 16a, 16b compared to a simple contact line.

In this example, the pins 14a, 14b are loosely inserted into the long holes 16a, 16b or sliding blocks 17a, 17b. In this way, the pins 14a, 14b can easily be decoupled from the drive pieces 15a, 15b or the sliding blocks 17a, 17b. In turn, the drive unit 7 can be decoupled from the cutting apparatus 1 easily as well. In a very preferred embodiment, there are no further means holding the pins 14a, 14b in the long holes 16a, 16b or sliding blocks 17a, 17b. However, they may be secured by means of a snap ring or a screw for example.

In this example, furthermore drive rails 18a, 18b are fastened on the first and second cutting plate 4a, 4b. The drive rails 18a, 18b run over the entire longitudinal extension l of the first cutting plate 4a and the second cutting plate 4b and are attached to the drive pieces 15a, 15b. The first and the second cutting plate 4a, 4b may be subjected to warpage and buckling because of the arrangement of the drive unit 7 on one side of the longitudinal extensions l of the first and the second cutting plate 4a, 4b and depending on the thickness of the cutting plates 4a, 4b and the quality of the guide 6. However, cutting plates 4a, 4b are naturally relatively thin and the guide 6 cannot be made too tight as then driving forces increase making the warpage and buckling problem worse. Dough getting between the guide 6 and the first and the second cutting plate 4a, 4b even intensifies the problem. On the other hand, if the guide 6 is rather loose, the warpage and buckling problem gets worse, too. To solve this problem, drive rails 18a, 18b are proposed, which run over the entire longitudinal extension l of the first and the second cutting plate 4a, 4b and avoid warpage and buckling of the first and the second cutting plate 4a, 4b. In a preferred embodiment, the drive rails 18a, 18b comprise the drive pieces 15a, 15b, to which the drive unit 7 is coupled by means of the eccentric pins 14a, 14b. However, the drive pieces 15a, 15b may be embodied as separate parts, which are mounted to the drive rails 18a, 18b.

In the example presented in the Figures, the first and the second cutting plate 4a, 4b are indirectly coupled to a drive piece 15a, 15b, concretely by means of the drive rails 18a, 18b. Although this is an advantageous solution, the first and the second cutting plate 4a, 4b may also be directly mounted to the drive pieces 15a, 15b. Moreover, the drive pieces 15a, 15b may be comprised by the first and the second cutting plate 4a, 4b. However, the drive pieces 15a, 15b may also be comprised by the drive rails 18a, 18b.

Beneficially, the rotational axis of the rotatable lever 11 and the axes of the pins 14a, 14b are aligned perpendicular to the longitudinal extension l and to the transverse extension w of the first cutting plate 4a and the second cutting plate 4b like this is the case in the presented example (i.e. the axes are oriented vertically in z-direction then). In this way, the cutting plates 4a, 4b can get close to a carrier, onto which dough pieces are placed as nearly no part protrudes downwards from the cutting plates 4a, 4b. For this reason, dough may be placed onto the carrier very precisely and cookies of high quality can be produced. This is contrary to prior art designs, which suffer from parts protruding downwards from the cutting plates thus impeding a low distance between the cutting plates and a carrier, onto which dough pieces are placed.

In another beneficial embodiment, the drive unit 7 can be fastened to the base body 2 by means of a screw 19 (here by means of a clamping lever) and can be removed from the base body 2 by simply loosening said screw 19 like it is the case in the presented example. Concretely, two pins 20, which are mounted to the base body 2, are clamped between a wedge 21 and the frame 10 by means of the single screw 19. Accordingly, the drive unit 7 can be mounted to the base body 2 and detached easily.

By use of the proposed features, the screw 19 cannot get lost as it simply has to be loosened to remove the drive unit 7, but needs not to be turned out completely. Accordingly, the screw 19 cannot fall into the dough or in even worse cases into the dough extrusion machine. Generally, the probability for losing the screws is quite high as the drive unit 7 has to be removed regularly for cleaning the cutting apparatus 1 and also for changing the base body 2 and/or the cutting plates 4a, 4b if, for example, different cookies shall be made with the dough extrusion machine respectively with the cutting apparatus 1.

The cutting apparatus 1 is designed to be coupled respectively mounted to a dough extrusion machine on the upper side of the base body 2, e.g. by means of screws (see the mounting holes next to the openings 3 in the base body in Fig. 1). In the connecting plane, sealings may be arranged in the region of the openings 3. Preferably, the drive unit 7 is partly arranged beside the dough extrusion machine in the operating state. Preferably, the drive unit 7 protrudes upwards as this is shown in Fig. 1 to 4.

Below the base body 2, a carrier (in particular a belt) is arranged, onto which the dough is placed. The width of the carrier may correspond to the width w of the cutting plates 4a, 4b, or the carrier may be broader. The carrier particularly moves in the y-direction (or the opposed y-direction) respectively in the direction of the transversal extension or width w of the cutting plates 4a, 4b.

In the above example, a rotating lever 11 is used to convert the rotational movement of the motor 8 into a linear movement of the cutting plates 4a, 4b. However, instead of a lever 11 equally a rotating disk with the eccentric pins 14a, 14b may be used.

One should also note that the motor 8 in this example is controlled to move back and forth to cause the movement of the cutting plates 4a, 4b. However, in an alternative embodiment, the movement of a continuously rotating motor 8 can be converted into a back and forth movement by means of a crank mechanism.

Fig. 5 now shows an enlarged cross sectional view AA of the cutting apparatus 1 and in particular that the guide 6 is formed by two guide rails 22a, 22b fastened to the base body 2 by means of screws 23 (note that the right screw 23 is omitted in Fig. 5 for the sake of a better overview). Accordingly, the guide rails 22a, 22b and thus the cutting plates 4a, 4b and the drive rails 18a, 18b can easily be mounted to and detached from the base body 2, for example, if different cookies shall be made with the dough extrusion machine respectively with the cutting apparatus 1 or for cleaning the cutting apparatus 1. The coupling between the drive rails 18a, 18b and the cutting plates 4a, 4b is achieved by small bolts 24. However, fixing the drive rails 18a, 18b to the cutting plates 4a, 4b respectively transferring a driving force from the drive rails 18a, 18b to the cutting plates 4a, 4b can also be done in other ways, for example by means of screws.

In a preferred embodiment, the guide rails 22a, 22b can be removed from the base body 2 by simply loosening the screws 23. For this reason, elongated washers 25 are used, and the guide rails 22a, 22b comprise long holes 26, which are slightly larger than the washers 25 in a beneficial embodiment as this is depicted in Fig. 6. If the guide rails 22a, 22b have to be fastened to the base body 2, the washers 25 are simply oriented transverse to the orientation of the long holes 26. In contrast, the washers 25 are oriented in the same orientation like the long holes 26 if the guide rails 22a, 22b have to be removed from the base body 2.

In usual cases, parts fastened by means of screws have circular holes what means that a screw has to be turned out completely to detach the fastened part. However, in case of a cutting apparatus 1 for a dough extrusion machine this is disadvantageous because the screws 23 may fall into the dough or in even worse cases into the dough extrusion machine as stated hereinbefore. The probability for losing the screws 23 is quite high as the guide 6 or the guide rails 22a, 22b has/have to be removed regularly for cleaning the cutting apparatus 1 and if different cookies shall be made. However, by use of the proposed features, the screws 23 cannot get lost as they simply have be loosened to remove the guide 6 or guide rails 22a, 22b, but need not turned out completely.

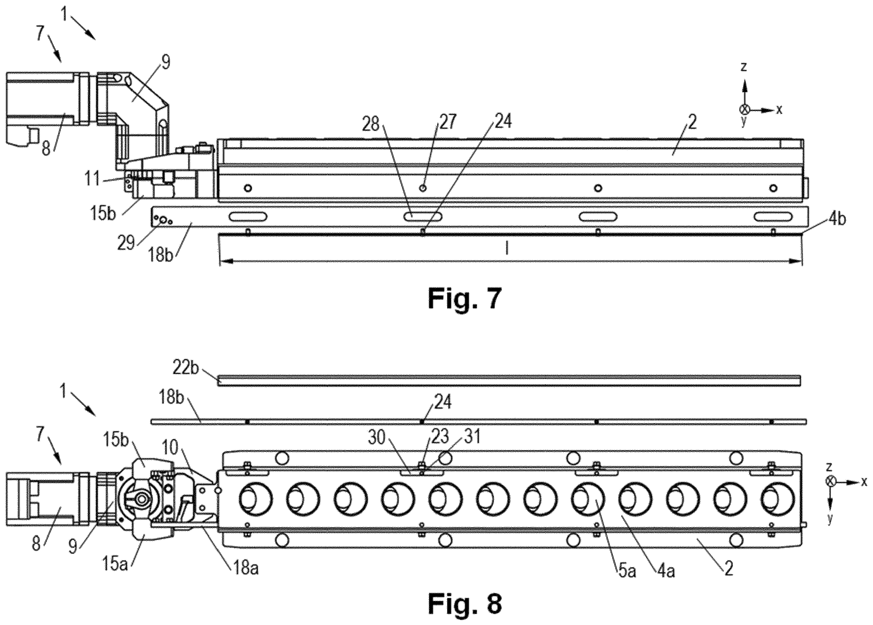

Figs 7 and 8 finally show exploded views of the exemplary cutting apparatus 1, Fig. 7 an exploded side view and Fig. 8 an exploded bottom view. In this views, the second drive rail 18b, the second guide rail 22b and the second cutting plate 4b are removed.

Figs 7 shows that in the region of the screws 23, which are mounted in threaded holes 27 in the base body 2, the drive rails 18a, 18b comprise long holes 28 so that they can move back and forth. The drive rails 18a, 18b moreover comprise mounting holes 29 to mount the drive rails 18a, 18b to the drive pieces 15a, 15b.

Figs 8 shows that the first (upper) cutting plate 4a comprises a recess 30 in the region of the bolt 24 respectively in the region of the hole 31 of the second drive rail 18b, into which the bolt 24 is stuck. The bolt 24 protrudes through the recess 30 so that a connection between the second drive rail 18b and the second cutting plate 4b is achieved. The connection between the first drive rail 18a and the first cutting plate 4a is achieved by a bolt 24 as well. However, the first cutting plate 4a needs no recess 30 therefor.

In addition to the openings 3 in the base body, the openings 5a, 5b in the cutting plates 4a, 4b and the recesses 30 in the cutting plates 4a, 4b, further cutouts or recesses may be arranged in the cutting plates 4a, 4b and/or in the base body 2 in order to reduce the contact area between the cutting plates 4a, 4b and/or between the first cutting plate 4a and the base body 2 and thus reduce friction between said parts. Moreover, cutouts or recesses may also be arranged in the guide rails 22a, 22b for the same reason. These measures do not just reduce friction, but also provide space for dough getting between the cutting plates 4a, 4b, the base body 2 and the guide rails 22a, 22b. In particular, in case of dough with chocolate, caramel or other friction increasing ingredients, the cutting plates 4a, 4b can easily get agglutinated without such cutouts or recesses.

It is noted that the invention is not limited to the embodiments disclosed hereinbefore, but combinations of the different variants are possible. In reality, the cutting device 1 may have more or less parts than shown in the Figures. The cutting device 1 and parts thereof may also be shown in different scales and may be bigger or smaller than depicted. Finally, the description may comprise subject matter of further independent inventions.

### List of References

- 1: cutting apparatus
- 2: base body.
- 3: opening
- 4a, 4b: cutting plate
- 5a, 5b: opening

- 6: guide
- 7: drive unit
- 8: motor
- 9: gear
- 10: frame

- 11: rotatable lever/disc
- 12: gear shaft
- 13: screw
- 14a, 14b: eccentric pin
- 15a, 15b: drive piece

- 16a, 16b: long hole
- 17a, 17b: sliding block
- 18a, 18b: drive rail
- 19: screw / clamping lever
- 20: pin

- 21: wedge
- 22a, 22b: guide rail
- 23: screw
- 24: bolt
- 25: washer
- 26: long hole
- 27: threaded hole
- 28: long hole
- 29: mounting hole
- 30: recess
- 31: hole

- l: longitudinal extension (length)
- w: transversal extension (width)

## Claims

1. A cutting apparatus (1) for a dough extrusion machine, comprising:
- a base body (2) having a plurality of openings (3) for the passage of dough,
- a first cutting plate (4a) arranged adjacent to the base body (2) and a second cutting plate (4b) arranged adjacent to the first cutting plate (4a), the first and second cutting plates (4a, 4b) each having a longitudinal extension (l) and a shorter transverse extension (w), and in each case several openings (5a, 5b) for the passage of dough,
- a guide (6), in which the first cutting plate (4a) and the second cutting plate (4b) are supported, the guide (6) enabling a linear movement of the first cutting plate (4a) and the second cutting plate (4b) in the direction (x) of their longitudinal extension (l) relative to the base body (2) and relative to each other and
- a single drive unit (7), which is mechanically coupled to the first cutting plate (4a) and the second cutting plate (4b) and designed to opposingly move the first cutting plate (4a) and the second cutting plate (4b) relative to the base body (2), **characterized in that**
the drive unit (7) and the mechanical coupling to the first cutting plate (4a) and to the second cutting plate (4b) are arranged in the extension of the longitudinal extensions (l) of the first cutting plate (4a) and the second cutting plate (4b) and exclusively on one side of the first cutting plate (4a) and the second cutting plate (4b).

2. The cutting apparatus (1) according to claim 1, **characterized in that**
- the drive unit (7) comprises a rotatable lever/disc (11) with two eccentric pins (14a, 14b), which are arranged opposite to each other relative to the center of rotation of the rotatable lever/disc (11),
- the first cutting plate (4a) and the second cutting plate (4b) are each coupled to a drive piece (15a, 15b) or have such a drive piece (15a, 15b), and
- each drive piece (15a, 15b) has an long hole (16a, 16b), which is aligned in the direction (y) of the transverse extension (w) of the cutting plates (4a, 4b) and into which one of the two said pins (14a, 14b) protrudes during operation of the cutting apparatus (1).

3. The cutting apparatus (1) according to claim 1 or 2, **characterized in that** the coupling between a pin (14a, 14b) and a long hole (16a, 16b) is effected by a sliding block (17a, 17b) movably mounted in the long hole (16a, 16b).

4. The cutting apparatus (1) according to claim 3, **characterized in that** the pins (14a, 14b) are loosely inserted into the long holes (16a, 16b) or sliding blocks (17a, 17b).

5. The cutting apparatus (1) according to any one of claims 2 to 4, **characterized in that** the rotational axis of the rotatable lever/disc (11) and the axes of the pins (14a, 14b) are aligned perpendicular to the longitudinal extension (l) and to the transverse extension (w) of the first cutting plate (4a) and the second cutting plate (4b).

6. The cutting apparatus (1) according to any one of claims 1 to 5, **characterized in that** on the first cutting plate (4a) and the second cutting plate (4b) in each case a drive rail (18a, 18b) is fastened, wherein the drive rails (18a, 18b) run over the entire longitudinal extension (l) of the first cutting plate (4a) and the second cutting plate (4b) and wherein the drive rails (18a, 18b) comprise the drive pieces (15a, 15b) or are attached to the drive pieces (15a, 15b).

7. The cutting apparatus (1) according to any one of claims 1 to 6, **characterized in that** the drive unit (7) can be fastened to the base body (2) by means of at least one screw (19) and can be removed from the base body (2) by simply loosening the at least one screw (19).

8. The cutting apparatus (1) according to any one of claims 1 to 7, **characterized in that** the guide (6) is formed by at least one guide rail (22a, 22b) fastened to the base body (2) by means of screws (23), which guide rail (22a, 22b) can be removed from the base body (2) by simply loosening the screws (23).
